# EUROPEAN PATENT SPECIFICATION

(11) **EP 3 895 782 B1**
(45) Date of publication and mention of the grant of the patent: **06.09.2023**
(21) Application number: 19895064.4
(22) Date of filing: 18.11.2019
(51) Int. Cl.: B01D 46/24, B01D 46/00, B01D 46/88

(54) **FILTER AND FILTER DEVICE**
FILTER UND FILTERVORRICHTUNG
DISPOSITIF DE FILTRAGE ET FILTRE

(30) Priority: 14.12.2018 JP 2018234045
(43) Date of publication of application: 20.10.2021
(73) Proprietor: Horkos Corp, Fukuyama-shi, Hiroshima 720-8650 (JP); TEC Project Services Corporation, Narashino-shi Chiba 275-0024 (JP)
(72) Inventor: FUKUSHIMA, Daiji, Fukuyama-shi, Hiroshima 720-2413 (JP); KURIHARA, Hidenao, Fukuyama-shi, Hiroshima 720-2413 (JP); SHIME, Hideki, Narashino-shi, Chiba 275-0024 (JP); KOCHIHIRA, Asafumi, Narashino-shi, Chiba 275-0024 (JP); YAMAGUCHI, Yoshitaka, Narashino-shi, Chiba 275-0024 (JP)
(74) Representative: Kramer Barske Schmidtchen Patentanwälte PartG mbB
(86) International application number: PCT/JP2019/045130
(87) International publication number: WO 2020/121744

(56) References cited:
- WO-A1-2019/244745
- DE-A1-102014 012 941
- JP-A- S52 130 068
- JP-A- S60 153 902
- JP-A- 2000 225 182
- JP-A- 2016 135 461
- JP-A- 2017 154 071
- US-A- 4 227 898
- US-A- 5 277 157
- US-A1- 2005 005 582
- US-A1- 2007 169 450
- US-A1- 2009 014 378

## Description

### TECHNICAL FIELD

The present invention relates to a filter that collects dust in a fluid and a filter apparatus using the filter, and more particularly, to a structure for preventing exposure to the dust when replacing the filter.

### BACKGROUND ART

A filter apparatus typically includes a housing, a filter housed in the housing, an inlet portion for introducing a fluid to be filtered into the housing, and an outlet portion for discharging the fluid filtered by the filter. Dust contained in the fluid introduced through the inlet portion is collected by a filter medium of the filter, and the fluid from which the dust has been removed is discharged as a clean fluid through the outlet portion. Patent Literatures 1 and 2 listed below describe an example of a filter having a hollow cylindrical shape.

A filter becomes clogged by repetition of dust collection and thus needs to be replaced after used for a certain period of time. In replacing the filter, it is necessary to exercise utmost caution so as to prevent exposure of an operator caused by the flying of dust adhering to the used filter. In a conventional Bag-inBag-out (BIBO) filter replacement method, filter replacement is performed through a plastic bag so that a used filter is not exposed to an open space, thereby preventing exposure caused by the flying of dust.

However, in the Bag-inBag-out method, since filters are taken out and inserted through the plastic bag, not only the workability is bad, but also the used filter may be exposed due to an operation error, which may cause exposure of the operator. Thus, there has conventionally been proposed a wet-down process that replaces a filter after wetting the filter (e.g., Patent Literature 3). This is a method that sprays a washing water to the inside of a filter apparatus to wet a used filter housed therein, and then takes the used filter out and replaces the used filter with a new one. According to this method, since dust adhering to the taken-out filter is in a wet state, it is possible to reduce exposure caused by the flying of dust.

However, even if the washing water is sprayed to the inside of the filter apparatus, there is no guarantee that the washing water is uniformly distributed to the entire area of the dust-adhering surface of the filter housed therein, and it is also not easy to visually check the wet state of the filter housed inside the apparatus. Thus, it is difficult to uniformly wet the entire area of the dust-adhering surface. Therefore, dust remaining in an unwetted part may fly when the filter is taken out, which may cause exposure.

The inventors of the present invention have proposed, as a measure against this problem, a filter replacement method called Wet Open Change (hereinbelow, referred to as "WOC") in Japanese Patent Application No. 2018-115977, which is an earlier application. This method follows the steps of bringing a filter housed in a housing into a submerged state by water injection to wet the filter (Wet), then detaching the housing to expose the filter to an open space (Open), and changing the used filter for a new filter in the open state (Change). According to such a WOC method, the entire area of the dust-adhering surface of the filter is completely wetted in a submerged state. Therefore, dust does not fly when replacing the filter, and thus exposure can be effectively prevented. Moreover, since the replacement is performed with the used filter exposed to the open space, the replacement operation is extremely easy.

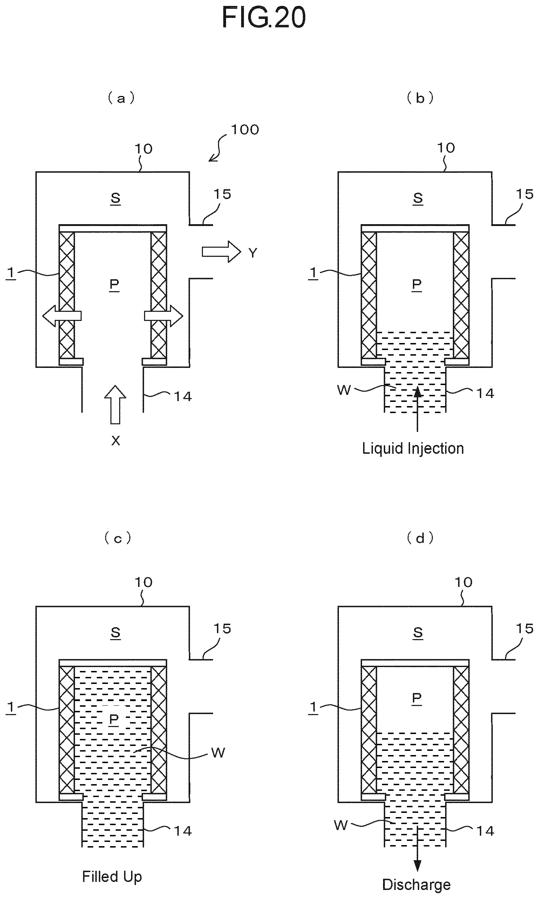

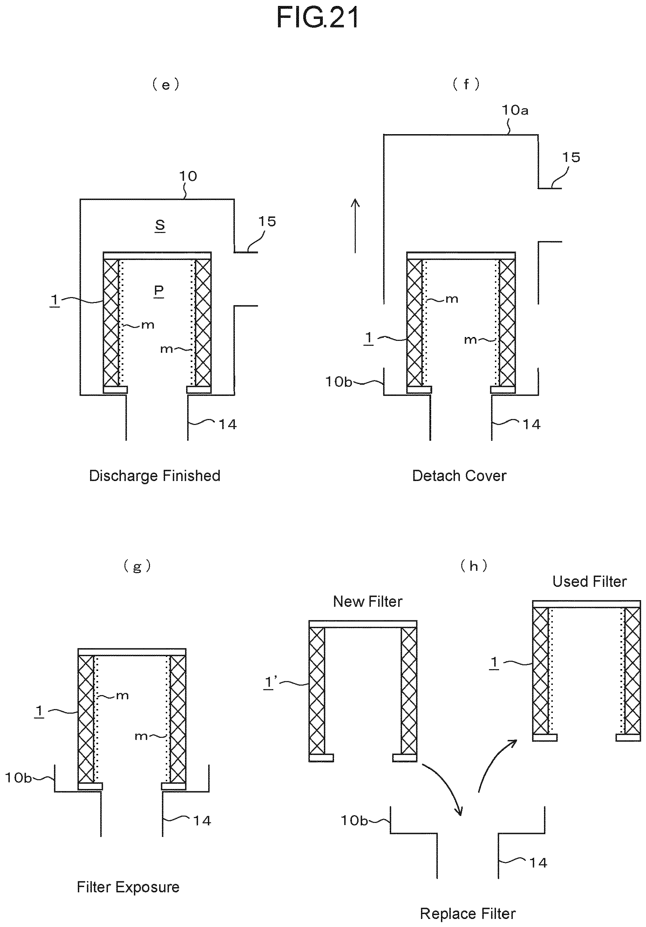

Figs. 20 and 21 illustrate a concrete example of the filter replacement using the WOC method described above. Fig. 20(a) is a schematic configuration diagram of a filter apparatus. A filter apparatus 100 includes a housing 10 and a filter 1 which is housed in the housing 10. The housing 10 includes an inlet portion 14 through which a fluid X (dusty air current) to be filtered is introduced and an outlet portion 15 through which a fluid Y (clean air current) filtered by the filter 1 is discharged.

In the filter apparatus 100, the dusty air current X that has flowed into a primary-side space P inside the filter 1 through the inlet portion 14 is filtered in the course of passing through the filter 1 from the inside to the outside as indicated by arrows, so that dust in the air current is collected by the filter 1. The air current that has flowed out to a secondary-side space S with the dust removed therefrom is discharged as the clean air current Y through the outlet portion 15.

Figs. 20(b) to 21(h) illustrate an outline of a procedure for replacing the filter 1 in the filter apparatus 100 described above. In the filter replacement, after the operation of the filter apparatus 100 is stopped, a valve (not illustrated) disposed upstream of the inlet portion 14 and downstream of the outlet portion 15 is brought into a closed state. Then, as illustrated in Fig. 20(b), a liquid W is injected into the filter 1 from the inlet portion 14 through a water injection pipe (not illustrated) communicating with the inlet portion 14. The liquid W to be injected may be water or a liquid other than water. The injected liquid W enters the primary-side space P of the filter 1, and a liquid level of the liquid W rises as the liquid W is injected.

As illustrated in Fig. 20(c), the primary-side space P is filled up with the liquid W by injecting the liquid W to the extent that the liquid W seeps from the outer surface of the filter 1. At this time, the entire area of the inner surface, namely, the dust-adhering surface of the filter 1 is immersed in the liquid W, that is, in a submerged state. When it is confirmed that the primary-side space P has been filled up with the liquid W on the basis of, for example, a stop of the rotation of an impeller disposed on a liquid injection path, the injection of the liquid W is stopped. Then, as illustrated in Fig. 20(d), the liquid W inside the filter 1 is discharged through the inlet portion 14. At a point in time when the discharge of the liquid W finishes, as illustrated in Fig. 21(e), the inner surface (dust-adhering surface) of the filter 1 is a wet surface m.

Next, as illustrated in Fig. 21(f), a cover 10a and a base 10b which constitute the housing 10 are separated from each other to detach the cover 10a. Further, a fixing member (not illustrated) which fixes the filter 1 to the base 10b is also detached. The detachment of the cover 10a brings the filter 1 having the wet inner surface into a state exposed to an open space as illustrated in Fig. 21(g). In this state, as illustrated in Fig. 21(h), the used filter 1 is taken out, and a new filter 1' is set on the base 10b.

Following the steps as described above eliminates the possibility of the flying of dust even if the replacement operation is performed in the open space because the dust-adhering surface of the used filter 1 is wet. Thus, it is possible to prevent exposure and secure safety. Moreover, since the replacement is performed with the filter 1 exposed to the open space without using a plastic bag as used in the Bag-inBag-out method, it is possible to easily perform the replacement operation using a wide space.

### CITATIONS LIST

### PATENT LITERATURE

Patent Literature 1: JP 2017-154071 A
Patent Literature 2: JP 2016-135461 A
Patent Literature 3: JP 2010-51852 A
Patent Literature 4: JP 2003-33602 A
Further filters are disclosed in US 2007/169450 A1, US 5 277 157 A, DE 10 2014 012941 A1, US 4 227 898 A, US 2005/005582 A1 and US 2009/014378 A1.

### BRIEF SUMMARY

### TECHNICAL PROBLEMS

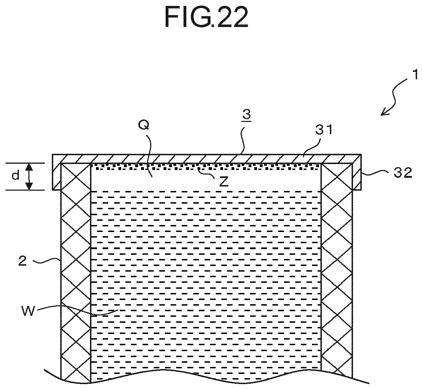

In the filter apparatus using the WOC method described above, it has turned out from a test conducted by the inventors of the present invention that, when wet-down is performed by injecting the liquid W into the internal space (primary-side space P) of the filter 1, the internal space is not completely filled up with the injected liquid W, and an air pocket Q as illustrated in Fig. 22 forms in the upper part of the internal space.

In Fig. 22, the filter 1 includes a filter body 2 having a cylindrical shape and a lid 3 attached to an upper opening of the filter body 2. The filter body 2 includes an inner tube, an outer tube, and a filter medium housed between the inner tube and the outer tube (not illustrated). The lid 3 includes a top plate 31 which covers the upper opening of the filter body 2 and a side wall 32 which is annularly disposed on the peripheral edge of the top plate 31. The side wall 32 is fitted with the outer surface of the upper part of the filter body 2. In response to the injection of the liquid W, air in an internal space of the filter body 2 escapes to the outside through the filter body 2 while being compressed. However, in a range indicated by "d" in the upper part of the internal space, since the outer side of the filter body 2 is covered with the side wall 32 of the lid 3, air cannot escape to the outside through the filter body 2. As a result, the air pocket Q forms in the range "d".

If such an air pocket Q forms, dust Z adhering to the back side of the top plate 31 of the lid 3 cannot be wetted with the liquid W. Thus, in filter replacement, the dry dust Z may fly off the filter 1 taken out, and there is a risk of exposure of the operator. Naturally, if the side wall 32 of the lid 3 is omitted, no air pocket Q forms. However, if the side wall 32 is not present, the lid 3 cannot be firmly attached to the filter body 2, and the seal performance between the lid 3 and the filter body 2 is also impaired. Thus, the omission of the side wall 32 is virtually impossible.

Note that Patent Literature 4 in the above list describes providing a slit on a part of a lid which covers an upper opening of a filter to prevent the formation of an air pocket in an upper space inside the filter. However, this structure is useful in a filter apparatus in which a fluid flows from the outside to the inside of a filter as described in Patent Literature 4, but not applicable to a filter apparatus in which a fluid flows from the inside to the outside of the filter as illustrated in Fig. 20(a) because the inside of the filter communicates with the outside through the slit.

The present invention defined in the claims solves the problems as described above which are specific to the WOC method, and an object thereof is to enable more thorough measures against exposure by preventing the formation of an air pocket in an internal space of a filter to eliminate imperfection in wetting dust adhering to the filter in the wet-down process.

### SOLUTIONS TO PROBLEMS

The above object is solved by providing a filter according to claim 1.

A filter according to the present teachings includes a filter body being hollow, and a lid attached to an upper part of the filter body. The lid includes a top plate covering an upper opening of the filter body and a side wall fitted with the upper part of the filter body. A lower end of the side wall is located below an upper end of the filter body. A ceiling portion contactable with a liquid injected to an inside of the filter body is disposed on the upper opening of the filter body. A lower surface of the ceiling portion is located at a lower end position of the side wall or below the lower end position.

Further, a filter apparatus according to the present teachings includes the filter described above, and a housing that houses the filter. The filter is disposed in such a manner that a fluid flows from the inside to outside of the filter body. The housing includes a base on which the filter is mounted, and a cover detachably attached to the base and covering the filter.

### ADVANTAGEOUS EFFECTS

According to the present teachings, the ceiling portion is present in the upper part of the internal space of the filter body, and the lower surface of the ceiling portion is located at the same position as or below the lower end of the side wall of the lid. Thus, in response to the injection of the liquid, all air in the internal space can be allowed to escape through the filter body without being blocked by the side wall. As a result, no air pocket forms in the upper part of the internal space, and the injected liquid thus reliably comes into contact with the lower surface of the ceiling portion. Consequently, dust adhering to the inner surface of the filter body and the lower surface of the ceiling portion is completely wetted, which makes it possible to prevent exposure caused by the flying of unwetted dust when replacing the filter.

### BRIEF DESCRIPTION OF DRAWINGS

Fig. 1 is a sectional view illustrating a schematic configuration of a filter of the present teachings.
Fig. 2 is a partial sectional view illustrating a state where an internal space of the filter is filled to capacity with a liquid.
Fig. 3 is a sectional view illustrating a schematic configuration of a filter apparatus in which the filter is housed.
Fig. 4 is a principal part enlarged sectional view illustrating a seal structure in a lower part of a filter body.
Fig. 5 is a sectional view of recesses formed on a lower surface of a ceiling portion.
Fig. 6 is a partial sectional view illustrating another embodiment of the present teachings.
Fig. 7 is a partial sectional view illustrating still another embodiment of the present teachings.
Fig. 8 is a partial sectional view illustrating still another embodiment of the present teachings.
Fig. 9 is a partial sectional view illustrating still another embodiment of the present teachings.
Fig. 10 is a partial sectional view illustrating still another embodiment of the present teachings not showing all features of the claims.
Fig. 11 is a partial sectional view illustrating still another embodiment of the present teachings not showing all features of the claims.
Fig. 12 is a partial sectional view illustrating still another embodiment of the present teachings not showing all features of the claims.
Fig. 13 is a partial sectional view illustrating still another embodiment of the present teachings not showing all features of the claims.
Fig. 14 is a partial sectional view illustrating still another embodiment of the present teachings not showing all features of the claims.
Fig. 15 is a sectional view illustrating a reference example that employs a solution other than the present teachings.
Fig. 16 is a sectional view illustrating a reference example that employs a solution other than the present teachings.
Fig. 17 is a sectional view illustrating a reference example that employs a solution other than the present teachings.
Fig. 18 is a sectional view illustrating a reference example that employs a solution other than the present teachings.
Fig. 19 is a sectional view illustrating a reference example that employs a solution other than the present teachings.
Fig. 20 is a diagram for describing a procedure of a WOC filter replacement method.
Fig. 21 is a diagram for describing the procedure of the WOC filter replacement method (continued from Fig. 20).
Fig. 22 is a partial sectional view illustrating a state where an air pocket forms in an internal space of the filter body.

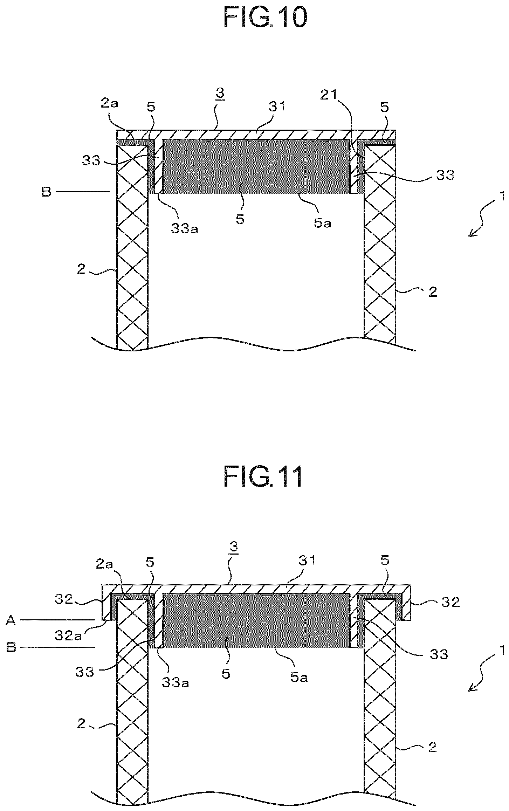

The examples shown in figures 10-19 are not covered by the present claims and do not form part of the invention.

### DESCRIPTION OF EMBODIMENTS

Hereinbelow, embodiments of the present teachings will be described with reference to the drawings. Identical reference signs designate identical or corresponding parts throughout the drawings.

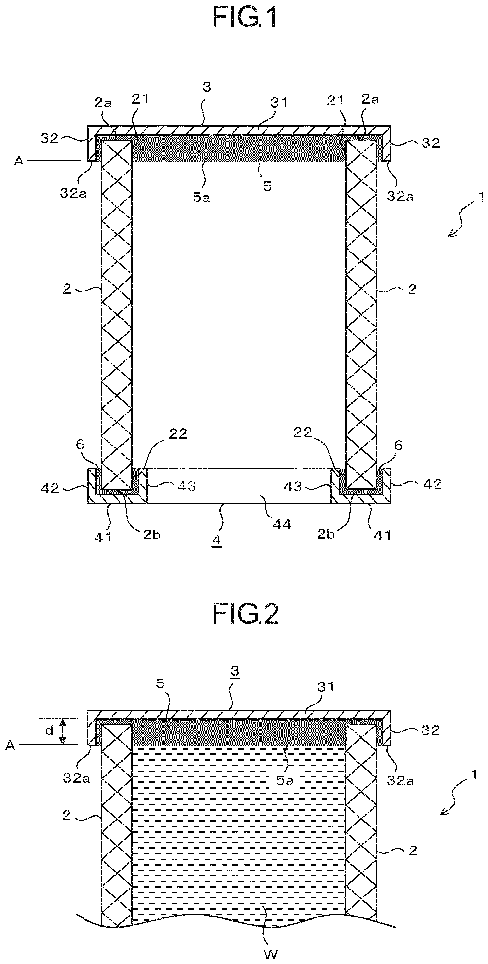

Fig. 1 illustrates an example of a filter according to the present teachings. A filter 1 includes a filter body 2 which is hollow, a lid 3 which is attached to the upper part of the filter body 2, a flange 4 which is attached to the lower part of the filter body 2, and a ceiling portion 5 which is the characteristic of the present teachings. In the present example, the filter 1 constitutes a high efficiency particulate air filter (HEPA filter).

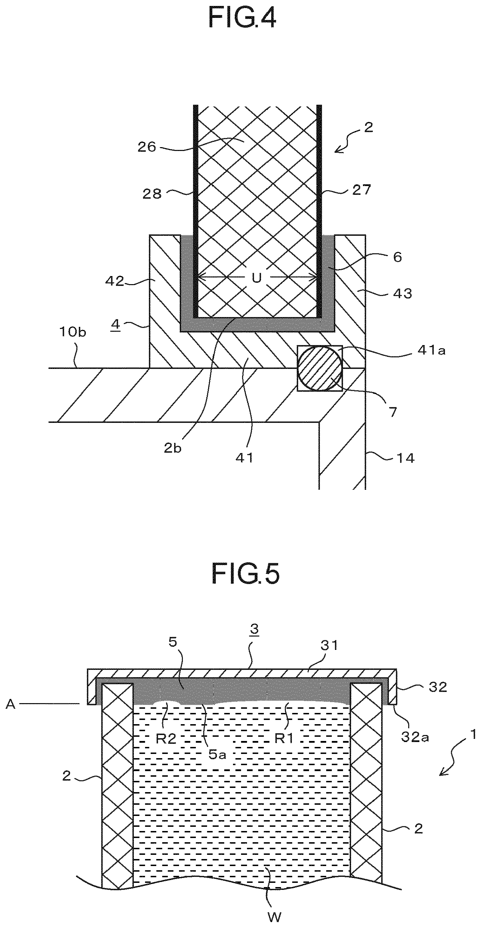

The filter body 2 is formed in a cylindrical shape, and includes an upper opening 21 on the upper side and a lower opening 22 on the lower side. As illustrated in Fig. 4, the filter body 2 includes an inner tube 27, an outer tube 28, and a filter medium 26 housed between the inner tube 27 and the outer tube 28. Each of the inner tube 27 and the outer tube 28 includes a cylindrical metal plate having a large number of holes through which a fluid passes. The filter medium 26 includes, for example, a pleated filter medium or granular filter media.

The lid 3 is made of metal or resin, and includes a top plate 31 which has a circular shape and covers the upper opening 21 of the filter body 2 and a side wall 32 which has an annular shape and is disposed on the peripheral edge of the top plate 31. The side wall 32 is an outer wall that is fitted with the upper part of the filter body 2 and located outside the filter body 2. A lower end 32a of the side wall 32 is located below an upper end 2a of the filter body 2.

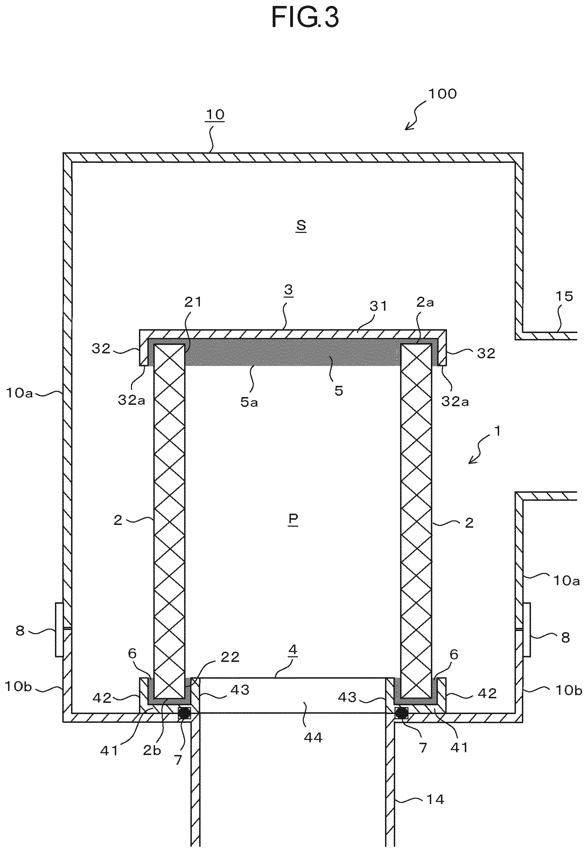

The flange 4 is made of metal or resin, and includes a bottom wall 41 having an annular shape, side walls 42, 43 each of which has an annular shape and disposed on the bottom wall 41, and an opening 44 which is surrounded by the side wall 43. As illustrated in Fig. 3, the bottom wall 41 is placed on a base 10b of a housing 10. The side wall 42 is an outer wall that is fitted with the lower part of the filter body 2 and located outside the filter body 2. The side wall 43 is an inner wall that is fitted with the lower part of the filter body 2 and located inside the filter body 2. The opening 44 is formed in a circular shape and communicates with an internal space of the filter body 2. A gap between the flange 4 and the filter body 2 is filled with resin 6 which seals the flange 4 and the filter body 2.

The ceiling portion 5 includes resin filled on the back side of the lid 3. In a manufacturing process, the lid 3 is turned upside down relative to a state in Fig. 1 and placed on the lower side, the filter body 2 is fitted with the lid 3 from above, and, in this state, resin is filled into the lid 3 serving as a saucer up to a position of the lower end 32a of the side wall 32. The resin is filled in the upper opening 21 of the filter body 2 and also filled in a gap between the lid 3 and the filter body 2. Consequently, the filter body 2 and the lid 3 are sealed with the resin. A lower surface 5a of the ceiling portion 5 formed in this manner constitutes a flat surface parallel to the top plate 31 of the lid 3 and is located at the same position as a position A as the lower end 32a of the side wall 32 of the lid 3. As another example, the lower surface 5a may be located below the lower end position A of the side wall 32 by a predetermined distance. Moreover, the ceiling portion 5 may be formed not by filling resin, but by resin molding using a mold.

Fig. 2 illustrates a state where the internal space (primary-side space) of the filter 1 in Fig. 1 is filled to capacity with a liquid W (e.g., water) for wet-down injected thereinto. As can be understood from Fig. 2, the ceiling portion 5 made of resin is present in an upper region (the range of "d") of the internal space where an air pocket Q (Fig. 22) forms in a conventional filter. In addition, the position of the lower surface 5a of the ceiling portion 5 coincides with the lower end position A of the side wall 32 of the lid 3. Thus, in response to the injection of the liquid W, all air in the internal space can be allowed to escape through the filter body 2 without being blocked by the side wall 32. As a result, no air pocket forms in the upper part of the internal space, and the injected liquid W thus reliably comes into contact with the lower surface 5a of the ceiling portion 5. Consequently, dust adhering to the inner surface of the filter body 2 and the lower surface 5a of the ceiling portion 5 is completely wetted, which makes it possible to prevent exposure caused by the flying of unwetted dust when replacing the filter 1.

In the case of the conventional Bag-in/Bag-out filter replacement, since filters are taken out and inserted by using a plastic bag, the presence of an unwetted part of the filter is not so serious. However, in the case of filter replacement using the WOC method described above, since filters are replaced in a completely exposed state, the presence of an unwetted part of the filter directly leads to exposure. Thus, it can be said that the present teachings exert an enormous effect particularly in a filter apparatus based on the WOC method.

Fig. 3 illustrates an example of a filter apparatus including the filter 1 in Fig. 1. A filter apparatus 100 includes the filter 1 and the housing 10 which houses the filter 1. Note that the filter 1 housed in the housing 10 is not limited to one illustrated in Fig. 1 and may be various filters described later.

The housing 10 includes a cover 10a which covers the filter 1 and the base 10b on which the filter 1 is mounted. The filter 1 is detachably fixed to the base 10b with a fixing member such as a bolt (not illustrated). The cover 10a is detachably attached to the base 10b with a coupler 8. The base 10b is provided with an inlet portion 14 through which a dusty air current is introduced. The cover 10a is provided with an outlet portion 15 through which a clean air current filtered by the filter 1 is discharged.

The flow of the air current in the filter apparatus 100 in Fig. 3 is the same as the flow of the air current illustrated in Fig. 20(a), that is, the air current flows from the inside (primary-side space P) to the outside (secondary-side space S) of the filter body 2. More specifically, the dusty air current flowing into the primary-side space P of the filter 1 through the inlet portion 14 is filtered in the course of passing though the filter 1 from the inside to the outside and discharged as the clean air current through the outlet portion 15. Although dust in the air current is collected by the filter body 2, the dust also adheres to the inner surface of the filter body 2 and the lower surface 5a of the ceiling portion 5. However, as described in Fig. 2, the primary-side space P is completely filled up with the liquid W by injecting the liquid W into the primary-space P in the wet-down process. Thus, the dust adhering to the inner surface of the filter body 2 and the lower surface 5a of the ceiling portion 5 is completely brought into a wet state.

Incidentally, in filter apparatuses, the dust collection efficiency is an important factor in performance evaluation. Although the collection efficiency of a filter itself is assured by a manufacturer of the filter, the same collection performance comprehensively needs to be assured also in the filter apparatus as a final product in which the filter is incorporated. Thus, in filter apparatuses used in, for example, the pharmaceutical industry, an integrity test for checking whether or not the collection performance meets a reference value is indispensable. For example, in the case of the HEPA filter, a collection efficiency of 99.97% (or a collection efficiency according to the filter performance) is required in the integrity test. Further, the ensuring of the collection efficiency is largely affected by the seal performance of a seal member that partitions the filter into the primary-side and the secondary side.

In a conventional filter apparatus, a sponge gasket such as ethylene propylene diene rubber (EPDM) is interposed, as the seal member described above, between a lower surface of a filter and a filter mounting surface of a housing. However, although the sponge gasket has excellent initial seal performance, there is apprehension that the gasket becomes crushed and the shape restoring property thereof is reduced due to aged deterioration, thereby making it difficult to assure the seal performance if detachment and attachment are repeatedly performed.

Thus, in the filter apparatus 100 in Fig. 3, a seal member 7 of an O ring is disposed between the bottom wall 41 of the flange 4 of the filter 1 and the base 10b. The O ring has less reduction in the shape restoring property caused by aged deterioration and can maintain the seal performance for a longer period of time than the sponge gasket. Thus, the O ring has an advantage in that equal seal performance can be obtained no matter who handles the O ring. As another example, instead of the O ring, an X ring or a lip seal may be used as the seal member 7.

The seal member 7 may be disposed on the base 10b. However, in the present embodiment, the seal member 7 is attached to an annular groove 41a (Fig. 4) which is formed on the lower surface of the bottom wall 41 of the flange 4. That is, the seal member 7 serves as one component of the filter 1. Note that an additional member including an annular groove to which the seal member 7 is attached may be prepared, and the additional member may be attached to the flange 4.

As illustrated in Fig. 4, in the present embodiment, the annular seal member 7 is disposed at a position closer to the inner tube 27 than to the center of a region U between the inner tube 27 and the outer tube 28 of the filter body 2. Therefore, when the filter 1 is fixed to the base 10b by tightening the filter 1 from above with, for example, a bolt or a holding plate, a tightening force is easily transmitted to the seal member 7 through the inner tube 27. Thus, the seal member 7 receives a pressing force from the inner tube 27 and is strongly press-fitted between the flange 4 and the base 10b, thereby sufficient seal performance can be ensured. In addition, since the seal member 7 is disposed at the position close to the inner tube 27, a small seal member having a short annular diameter can be used. Note that, although the seal member 7 is disposed directly below the inner tube 27 in Fig. 4, this is merely an example, and the seal member 7 may be disposed at any position near the inner tube 27.

Incidentally, in the embodiment illustrated in Fig. 1, when resin is filled in forming the ceiling portion 5, the lower surface 5a of the ceiling portion 5 may not become a completely flat surface and have large and small recesses R1, R2 caused by, for example, shrinkage of the resin as illustrated in Fig. 5. These recesses R1, R2 are located above the lower end position A of the side wall 32. Thus, when the liquid W is injected in the wet-down process, the recesses R1, R2 may become air pockets, and the liquid W thus may not reach the inside of each of the recesses R1, R2. Therefore, if dust adheres to the inside of each of the recesses R1, R2, the dust is not wetted with the liquid W, and there is still apprehension that exposure occurs in filter replacement.

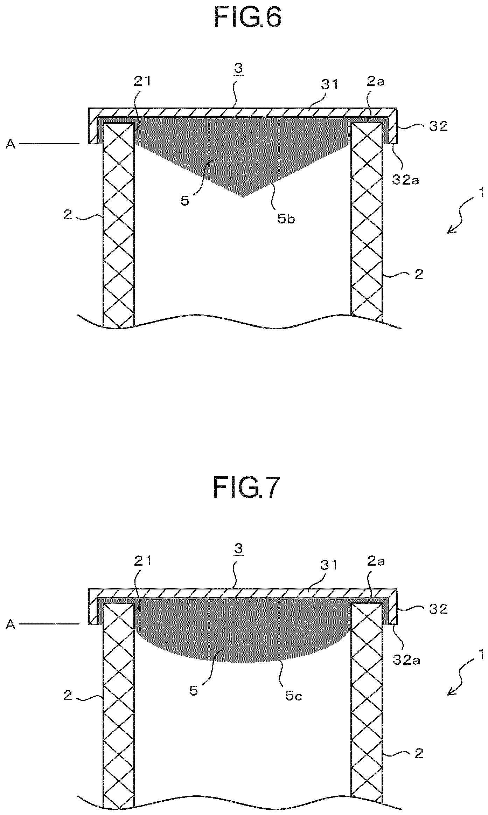

In view of this, for example, embodiments illustrated in Figs. 6 and 7 can be considered as measures against the above problem. In Fig. 6, a lower surface 5b of the ceiling portion 5 is formed in a cone shape, a pyramid shape, or a roof shape. In Fig. 7, a lower surface 5c of the ceiling portion 5 is formed in a dome shape or a saddle shape. In these embodiments, the lower surfaces 5b, 5c of the ceiling portion 5 are projecting surfaces that project downward, and each of the projecting surfaces is located below the lower end position A of the side wall 32. Further, the ceiling portion 5 is formed by resin molding.

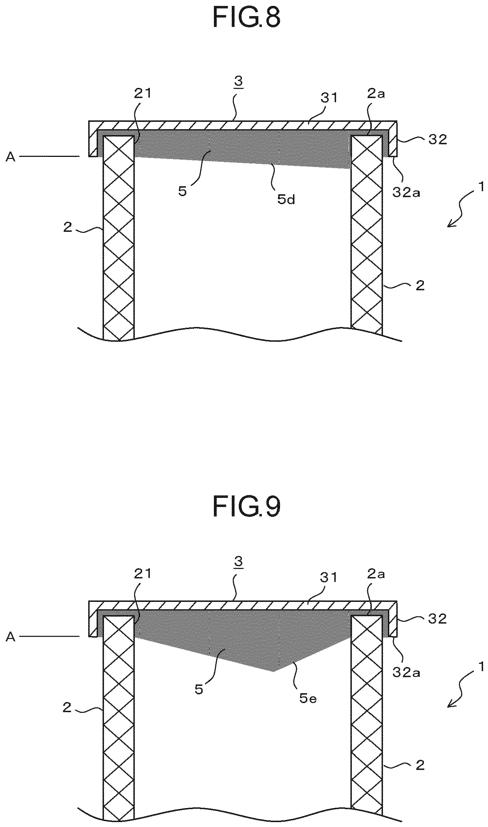

Moreover, as another example, an embodiment illustrated in Fig. 8 can also be considered. In Fig. 8, a lower surface 5d of the ceiling portion 5 is formed as an inclined surface. This inclined surface is located below the lower end position A of the side wall 32. Further, the ceiling portion 5 is formed by resin molding.

As still another example, an embodiment illustrated in Fig. 9 can also be considered. In Fig. 9, a lower surface 5e of the ceiling portion 5 is formed as a projecting surface having an asymmetrical cone, pyramid, or roof shape. This projecting surface is located below the lower end position A of the side wall 32. Further, the ceiling portion 5 is formed by resin molding. Note that the lower surface 5e may be a projecting surface having an asymmetrical dome or saddle shape.

In this manner, each of the lower surfaces 5b to 5e of the ceiling portion 5 is located below the lower end position A of the side wall 32. Thus, even if the recesses R1, R2 as illustrated in Fig. 5 are present on each of the lower surfaces 5b to 5e, no air pocket forms in these recesses, and the injected liquid surely reaches the inside of each of the recesses. Therefore, the entire area of each of the lower surfaces 5b to 5e of the ceiling portion 5 comes into contact with the liquid W. Consequently, it is possible to completely wet dust adhering to each of the lower surfaces 5b to 5e and eliminate the risk of exposure.

Fig. 10 illustrates another embodiment not showing all features of the claims of the lid 3. In Fig. 1 described above, the side wall 32 of the lid 3 is the outer wall disposed on the peripheral edge of the top plate 31 and located outside the filter body 2. On the other hand, in the embodiment in Fig. 10, a side wall 33 of the lid 3 is an inner wall disposed near the peripheral edge of the top plate 31 and located inside the filter body 2. Here, the lower surface 5a of the ceiling portion 5 is located at the same position as a position B of a lower end 33a of the side wall 33. However, the lower surface 5a of the ceiling portion 5 may be located below the lower end position B by a predetermined distance. Further, the embodiments in Figs. 6 to 9 may be employed in the ceiling portion 5.

Fig. 11 illustrates a still another embodiment not showing all features of the claims of the lid 3. In the embodiment in Fig. 11, a side wall of the lid 3 includes the outer wall 32 in Fig. 1 and the inner wall 33 in Fig. 10. The lower end 33a of the inner wall 33 is located below the lower end 32a of the outer wall 32. The lower surface 5a of the ceiling portion 5 is located at the same position B as the lower end 33a of the inner wall 33. Also in this case, the lower surface 5a may be located below the lower end position B of the inner wall 33 by a predetermined distance. Further, the embodiments in Figs. 6 to 9 may be employed in the ceiling portion 5.

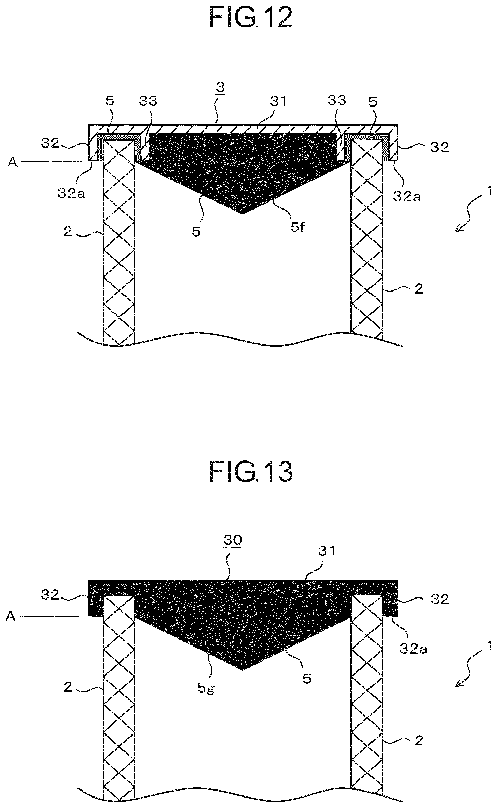

Fig. 12 illustrates another embodiment not showing all features of the claims of the ceiling portion 5. In Fig. 12, the ceiling portion 5 is a molded article that is previously resin-molded and attached to the lid 3 with retrofitting. As a method of the attachment, for example, a method that fits the ceiling portion 5 with the inside of the inner wall 33 and fixes the ceiling portion 5 to the top plate 31 with an adhesive or the like can be considered. Although the outer wall 32 and the inner wall 33 have the same length, the outer wall 32 and the inner wall 33 may have different lengths. A lower surface 5f of the ceiling portion 5 is located below the position A of the lower end 32a of the outer wall 32. In this embodiment, although the lower surface 5f of the ceiling portion 5 has the same shape as the lower surface 5b in Fig. 6, the lower surface 5f may have the same shape as each of the lower surfaces 5c to 5e in Figs. 7 to 9.

Fig. 13 illustrates still another embodiment not showing all features of the claims of the ceiling portion 5. In Fig. 13, the ceiling portion 5 and a lid 30 (the top plate 31 and the side wall 32) are integrally formed by resin molding. In this case, the ceiling portion 5 and the lid 30 may be previously manufactured as a single molded article and the molded article may be fixed to the filter body 2 with a fixing member or resin or the like. Alternatively, the ceiling portion 5 and the lid 30 may be directly resin-molded to the filter body 2. A lower surface 5g of the ceiling portion 5 is located below the position A of the lower end 32a of the outer wall 32. Also in this embodiment, although the lower surface 5g of the ceiling portion 5 has the same shape as the lower surface 5b in Fig. 6, the lower surface 5g may have the same shape as each of the lower surfaces 5c to 5e in Figs. 7 to 9.

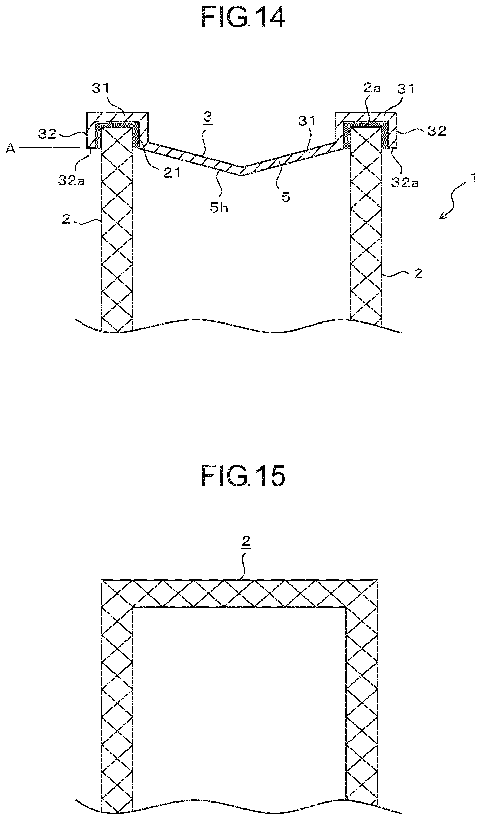

Fig. 14 illustrates still another embodiment not showing all features of the claims of the ceiling portion 5. In Fig. 14, a part of the top plate 31 of the lid 3 also serves as the ceiling portion 5. The lid 3 may be made of metal or resin. A lower surface 5h of the ceiling portion 5 is a projecting surface having a cone shape, a pyramid shape, or a roof shape similar to the lower surface 5b in Fig. 6 and located below the position A of the lower end 32a of the side wall 32. The lower surface 5h may have the same shape as each of the lower surfaces 5c to 5e in Figs. 7 to 9.

Some means other than the embodiments of the present teachings described above can be considered as means for preventing the formation of an air pocket in the internal space of the filter 1. These are illustrated in Figs. 15 to 19 as reference examples.

In Fig. 15, the upper opening 21 and the lid 3 in Fig. 1 are not provided on the upper part of the filter body 2, and the filter body 2 is integrally formed in a bottomed tubular shape with the lower opening 22 in Fig. 1 left. With this structure, air in the internal space can be allowed to escape through the upper surface of the filter body 2 when water is injected in the wet-down process. Thus, it is possible to prevent the formation of an air pocket in the internal space.

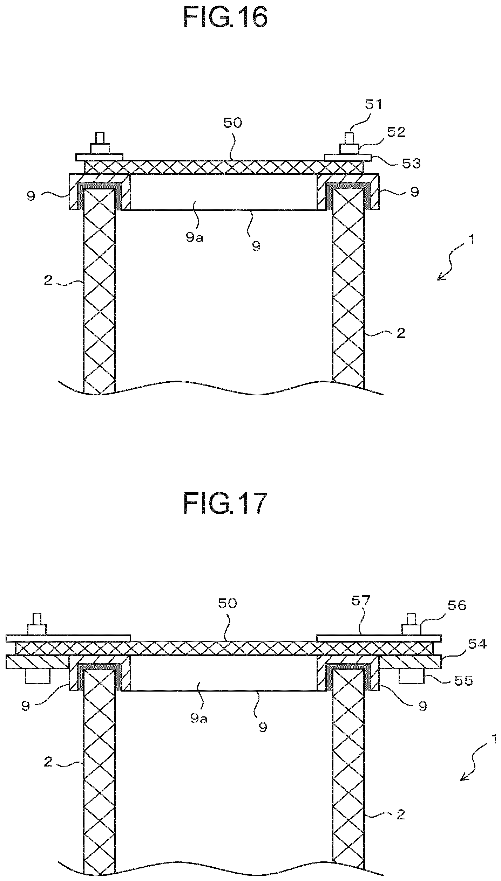

In Fig. 16, instead of the lid 3 in Fig. 1, a flange 9 having an opening 9a is disposed on the upper part of the filter body 2. Further, a filter plate 50 including only a filter medium is attached to the top of the flange 9 with a stud bolt 51, a nut 52, a holding plate 53 and the like. The opening 9a of the flange 9 is covered with the filter plate 50. Such a structure also enables air in the internal space of the filter body 2 to escape through the opening 9a and the filter plate 50 when water is injected in the wet-down process. Thus, it is possible to prevent the formation of an air pocket in the internal space.

Fig. 17 is a modification in Fig. 16 in which another flange 54 is additionally provided, and the filter plate 50 is attached to the flange 54 with a bolt 55, a nut 56, a holding plate 57 and the like.

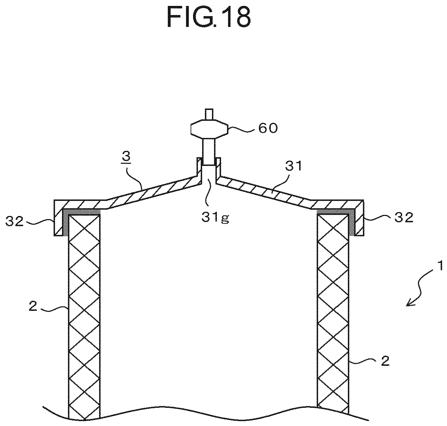

In Fig. 18, the top plate 31 of the lid 3 is formed in a cone shape projecting upward, and a syringe filter 60 is attached to a hole 31g which is disposed at a vertex position of the top plate 31. Such a structure also enables air in the internal space of the filter body 2 to escape through the syringe filter 60 when water is injected in the wet-down process. Thus, it is possible to prevent the formation of an air pocket in the internal space.

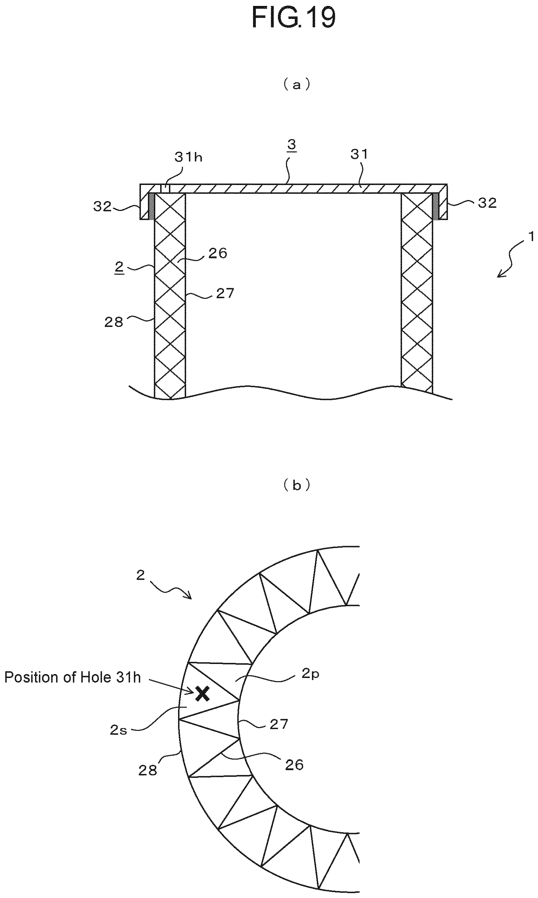

In Fig. 19, as illustrated in (a), a hole 31h as an air vent is disposed on a part of the top plate 31 of the lid 3. As specifically illustrated in (b), the hole 31h is disposed at a position corresponding to a secondary-side space 2s (outer side) of the pleated filter medium 26 between the inner tube 27 and the outer tube 28. The hole 31h may be provided at a plurality of positions. Although a primary-side space 2p (inner side) of the plated filter medium 26 is dirty with dust, the secondary-side space 2s through which a filtered air current flows is not dirty with dust. Thus, even if the hole 31h as an air vent is disposed at this position, there is no fear of contamination. Such a structure also enables air in the internal space of the filter body 2 to escape through the hole 31h when water is injected in the wet-down process. Thus, it is possible to prevent the formation of an air pocket in the internal space.

The present teachings can employ various embodiments other than the embodiments described above. For example, although the above embodiments describe, as an example, the filter body 2 having a cylindrical shape, the filter body 2 may have a rectangular tubular shape. Moreover, although the above embodiments describe the HEPA filter as an example of the filter 1, the present teachings are also applicable to an ultra low penetration air filter (ULPA filter) having a higher performance than the HEPA filter or other common filters. Furthermore, although the above embodiments describe an air current (gas) as an example of the fluid to be filtered, the present teachings are also applicable to an apparatus that filters liquid or vapor.

### INDUSTRIAL APPLICABILITY

The present teachings can be used in places where it is necessary to take all possible measures against exposure, such as pharmaceutical factories and agricultural chemical factories where highly active pharmaceutical substances are handled.

### REFERENCE SIGNS LIST

- 1: filter
- 2: filter body
- 2a: upper end of filter body
- 3: lid
- 4: flange
- 5: ceiling portion
- 5a to 5h: lower surface of ceiling portion
- 7: seal member
- 10: housing
- 10a: cover
- 10b: base
- 21: upper opening
- 26: filter medium
- 27: inner tube
- 28: outer tube
- 31: top plate
- 32: side wall (outer wall)
- 33: side wall (inner wall)
- 32a, 33a: lower end of side wall
- 100: filter apparatus
- U: region between inner tube and outer tube
- W: liquid

## Claims

1. A filter detachably attachable to a filter apparatus, comprising:
a filter body (2) being hollow; and
a lid (3; 30), wherein
the filter body comprises an upper opening (21) on the upper side and a lower opening (22) on the lower side, when attached to the filter apparatus, wherein the course of dusty air current passing through the filter is from the inside to the outside,
the lid (3) is attached to an upper part of the filter body (2) and includes a top plate (31) covering the upper opening (21) of the filter body and a side wall fitted with the upper part of the filter body,
a lower end (32a, 33a) of the side wall (32, 33) being located below an upper end (2a) of the filter body,
a ceiling portion (5) contactable with a liquid (W) injected to an inside of the filter body (2) is disposed on the upper opening (21) of the filter body, and
a lower surface (5b to 5h) of the ceiling portion (5) is located at a lower end position (A) of the side wall (32) or below the lower end position (A) such that no air pocket forms in the upper part of the inside of the filter body (2) when liquid (W) is injected to the inside of the filter body (2) and the injected liquid (W) comes in contact with the entire area of the lower surface (5b to 5h),
wherein the side wall (32, 33) of the lid (3) is an outer wall (32) disposed on a peripheral edge of the top plate (31) and located outside the filter body (2),
wherein the ceiling portion (5) includes resin filled on a back side of the lid (3), and
wherein the resin is filled in each of the upper opening of the filter body (2), a gap between the top plate (31) and the filter body (2), and a gap between the outer wall (32) and the filter body (2).

2. The filter according to claim 1, wherein the lower surface of the ceiling portion (5) is a flat surface.

3. The filter according to claim 1, wherein the lower surface of the ceiling portion (5) is a projecting surface projecting downward.

4. The filter according to claim 1, wherein the lower surface of the ceiling portion (5) is an inclined surface.

5. The filter according to any one of claims 1 to 4, further comprising:
a flange (4) attached to a lower part of the filter body (2); and
a seal member (7) attached to a lower surface of the flange (4), wherein
the seal member (7) is an O ring, an X ring, or a lip seal.

6. The filter according to claim 5, wherein the filter body (2) includes an inner tube (27), an outer tube (28), and
a filter medium (26) housed between the inner tube (27) and the outer tube (28), and
the seal member (7) is disposed at a position closer to the inner tube (27) than to a center of a region between the inner tube (27) and the outer tube (28).

7. A filter apparatus comprising: the filter according to any one of claims 1 to 6; and
a housing (10) that houses the filter, wherein
the filter is disposed in such a manner that a fluid flows from the inside to outside of the filter body, and
the housing (10) includes
a base (10b) on which the filter is mounted, and
a cover (10a) detachably attached to the base and covering the filter.

## Patentansprüche

1. Filter, der entfernbar an eine Filtervorrichtung anbringbar ist, mit
einem Filterkörper (2), der hohl ist, und
einem Deckel (3; 30), bei dem
der Filterkörper eine obere Öffnung (21) an der oberen Seite und eine untere Öffnung (22) an der unteren Seite aufweist, wenn er an der Filtervorrichtung angebracht ist, bei dem der Verlauf eines staubhaltigen Luftstroms, der durch das Filter passiert, von der Innenseite zu der Außenseite ist,
der Deckel (3) an einem oberen Teil des Filterkörpers (2) angebracht ist und eine obere Platte (31), die die obere Öffnung (21) des Filterkörpers abdeckt, und eine Seitenwand aufweist, die mit dem oberen Teil des Filterkörpers gepasst ist,
ein unteres Ende (32a, 33a) der Seitenwand (32, 33) sich unterhalb eines oberen Endes (2a) des Filterkörpers befindet,
ein Deckenbereich (5), der mit einer Flüssigkeit (W) kontaktierbar ist, die in ein Inneres des Filterkörpers (2) gespritzt wird, an der oberen Öffnung (21) des Filterkörpers angeordnet ist, und
eine untere Fläche (5b bis 5h) des Deckenbereichs (5) sich an einer unteren Endposition (A) der Seitenwand (32) oder unterhalb der unteren Endposition (A) befindet, so dass sich keine Lufttasche in dem oberen Teil der Innenseite des Filterkörpers (2) ausbildet, wenn eine Flüssigkeit (W) in das Innere des Filterkörpers (2) gespritzt wird, und die eingespritzte Flüssigkeit (W) in Kontakt mit dem gesamten Bereich der unteren Oberfläche (5d bis 5h) kommt,
bei dem die Seitenwand (32, 33) des Deckel (3) eine Außenwand (32) ist, die an einer Umfangskante der oberen Platte (31) angeordnet ist und sich außenseitig des Filterkörpers (2) befindet,
bei dem der Deckenbereich (5) ein Kunstharz aufweist, das auf eine Rückseite des Deckels (3) gefüllt ist, und
bei dem das Kunstharz in jede von der oberen Öffnung des Filterkörpers (2), einen Spalt zwischen der oberen Platte (31) und dem Filterkörper (2) und einen Spalt zwischen der Außenwand (32) des Filterkörpers (2) gefüllt ist.

2. Filter nach Anspruch 1, bei dem die untere Oberfläche des Deckenbereichs (5) eine flache Oberfläche ist.

3. Filter nach Anspruch 1, bei dem die untere Oberfläche des Deckenbereichs (5) eine vorstehende Oberfläche ist, die nach unten vorsteht.

4. Filter nach Anspruch 1, bei dem die untere Oberfläche des Deckenbereichs (5) eine geneigte Oberfläche ist.

5. Filter nach einem der Ansprüche 1 bis 4, ferner mit
einem Flansch (4), der an einem unteren Teil des Filterkörpers (2) angebracht ist, und
einem Dichtungsbauteil (7), das an einer unteren Oberfläche des Flansches (4) angebracht ist, bei dem
das Dichtungsbauteil (7) ein O-Ring, ein X-Ring oder eine Dichtlippe ist.

6. Filter nach Anspruch 5, bei dem der Filterkörper (2) ein Innenrohr (27), ein Außenrohr (28) und
ein Filtermedium (26) aufweist, das zwischen dem Innenrohr (27) und dem Außenrohr (28) aufgenommen ist, und
das Dichtungsbauteil (7) an einer Position näher zu dem Innenrohr (27) als zu einer Mitte eines Bereichs zwischen dem Innenrohr (27) und dem Außenrohr (28) angeordnet ist.

7. Filtervorrichtung, mit dem Filter nach einem der Ansprüche 1 bis 6, und
einem Gehäuse (10), das das Filter aufnimmt, bei dem
der Filter in einer solchen Weise angeordnet ist, dass ein Fluid von der Innenseite zu der Außenseite des Filterkörpers strömt, und
das Gehäuse (10),
eine Basis (10b), an welcher der Filter montiert wird, und
eine Abdeckung (10a) aufweist, die entfernbar an die Basis angebracht wird und den Filter abdeckt.

## Revendications

1. Filtre pouvant être fixé de manière amovible à un appareil de filtrage, comprenant :
un corps de filtre (2) creux ; et
un couvercle (3 ; 30), dans lequel
le corps de filtre comprend une ouverture supérieure (21) sur le côté supérieur et une ouverture inférieure (22) sur le côté inférieur, lorsqu'il est fixé à l'appareil de filtrage, dans lequel le courant d'air poussiéreux traversant le filtre va de l'intérieur vers l'extérieur,
le couvercle (3) est fixé à une partie supérieure du corps de filtre (2) et comprend une plaque supérieure (31) couvrant l'ouverture supérieure (21) du corps de filtre et une paroi latérale ajustée à la partie supérieure du corps de filtre,
une extrémité inférieure (32a, 33a) de la paroi latérale (32, 33) étant située en dessous d'une extrémité supérieure (2a) du corps de filtre,
une partie de plafond (5) pouvant entrer en contact avec un liquide (W) injecté à l'intérieur du corps de filtre (2) est disposée sur l'ouverture supérieure (21) du corps de filtre, et
une surface inférieure (5b à 5h) de la partie de plafond (5) est située à une position d'extrémité inférieure (A) de la paroi latérale (32) ou en dessous de la position d'extrémité inférieure (A) de sorte qu'aucune poche d'air ne se forme dans la partie supérieure de l'intérieur du corps de filtre (2) lorsque le liquide (W) est injecté à l'intérieur du corps de filtre (2) et que le liquide injecté (W) entre en contact avec toute la surface de la surface inférieure (5b à 5h),
dans lequel la paroi latérale (32, 33) du couvercle (3) est une paroi extérieure (32) disposée sur un bord périphérique de la plaque supérieure (31) et située à l'extérieur du corps de filtre (2),
dans lequel la partie de plafond (5) comprend de la résine remplie sur la face arrière du couvercle (3), et
dans lequel la résine est remplie dans l'ouverture supérieure du corps de filtre (2), dans un espace entre la plaque supérieure (31) et le corps de filtre (2), et dans un espace entre la paroi extérieure (32) et le corps de filtre (2).

2. Filtre selon la revendication 1, dans lequel la surface inférieure de la partie de plafond (5) est une surface plane.

3. Filtre selon la revendication 1, dans lequel la surface inférieure de la partie de plafond (5) est une surface saillante faisant saillie vers le bas.

4. Filtre selon la revendication 1, dans lequel la surface inférieure de la partie de plafond (5) est une surface inclinée.

5. Filtre selon l'une quelconque des revendications 1 à 4, comprenant en outre :
une bride (4) fixée à la partie inférieure du corps de filtre (2) ; et
un élément d'étanchéité (7) fixé à la surface inférieure de la bride (4), dans lequel l'élément d'étanchéité (7) est un joint torique, un joint en X ou un joint à lèvre.

6. Filtre selon la revendication 5, dans lequel le corps de filtre (2) comprend un tube intérieur (27), un tube extérieur (28), et
un milieu filtrant (26) logé entre le tube intérieur (27) et le tube extérieur (28), et
l'élément d'étanchéité (7) est disposé dans une position plus proche du tube intérieur (27) que du centre d'une région située entre le tube intérieur (27) et le tube extérieur (28).

7. Appareil de filtrage comprenant : le filtre selon l'une quelconque des revendications 1 à 6 ; et
un boîtier (10) qui loge le filtre, dans lequel
le filtre est disposé de telle sorte qu'un fluide s'écoule de l'intérieur vers l'extérieur du corps de filtre, et
le boîtier (10) comprend
une base (10b) sur laquelle le filtre est monté, et
une couverture (10a) fixée de manière amovible à la base et recouvrant le filtre.
